# EUROPEAN PATENT SPECIFICATION

(11) **EP 0 832 549 B1**
(45) Date of publication and mention of the grant of the patent: **28.11.2001**
(21) Application number: 97610044.6
(22) Date of filing: 26.09.1997
(51) Int. Cl.: A01C 1/00, A01C 3/06, B65G 23/44

(54) **A vehicle having bottom chains and means for tightening these**
Fahrzeug mit Kratzbodenkette und Vorrichtung um diese zu spannen
Véhicule à chaîne gratte-fond et dispositif pour tendre celle-ci

(30) Priority: 27.09.1996 DK 106396
(43) Date of publication of application: 01.04.1998
(73) Proprietor: MASKINFABRIKEN SAMSON, TANGE A/S, 8850 Bjerringbro (DK)
(72) Inventor: Allerod, Morten, 7800 Skive (DK)
(74) Representative: Pedersen, Soeren Skovgaard

(56) References cited:
- EP-A- 0 497 447
- DE-A- 3 811 393
- DE-A- 4 413 321
- DE-U- 8 902 422

## Description

The present invention relates to a vehicle, preferably an agricultural vehicle, such as a spreader for spreading spreadable materials, such as farmyard manure, comprising a body and a hydraulic motor for driving a feed device, which is arranged in the bottom of the body, and which comprises at least one bottom chain with associated pulley wheel and chain tightener means for tightening the chain through a substantially linear displacement of at least one of the pulley wheels, where the chain tightener means comprise one or more hydraulic cylinders which, together with the hydraulic motor, communicate with the hydraulic system of the vehicle via a regulation unit.

Chain drives for various purposes are widely used within the field of agricultural machines among others. In case of spreaders for spreading farmyard manure, compost, sludge or the like it is known to use chains for feeding the material, chains being arranged in the bottom section of a body and provided with transverse carrier elements for transporting the contents of the body, such as e.g. manure or the like, in the travelling direction of the chains to discharge the contents. The bottom chains are typically arranged along the long sides of the vehicle and are thus under a great load, as the entire contents rest on the transverse carriers between the chains.

As the chains are subjected to wear in operation, causing them to become slack, an adjustment device is arranged to tighten the chains by adjustment of the position of one of the pulley wheels associated with each chain. This adjustment device operates in that the pulley wheel is mounted in a longitudinally slidable slide block in a guideway. The slide block is provided with a threaded rod having an adjustment nut which acts against a fixed stop, allowing the position of the pulley wheel with respect to the other pulley wheel or wheels in the chain transmission to be adjusted by means of the nut. This is a relatively simple and sturdy structure, which also makes it simple to tighten as well as remove a chain. The chains may thus be tightened manually by tightening the nut in the adjustment device.

Tightening of the chains at regular intervals is thus desirable, because unduly great wear on the chain is hereby obviated. Furthermore, also the efficiency of the chain transmission is affected unfavourably by a worn and slack chain. Agricultural vehicles, such as the above-mentioned spreaders, generally operate in highly corrosive environments and frequently handle very aggressive materials, which causes the chains to be subjected to corrosion as well, which also contributes to wear and reduction of the service life of the chains.

The bottom chains in connection with agricultural vehicles, such as e.g. manure spreaders, beat harvesters and unloading carriages, are arranged in the bottom of the body, so that it may be hard to get access to them, which may make it difficult to perform this adjustment. If a long period of time elapses between the adjustments, it is moreover likely that the adjustment nut will rust in, which additionally impedes the tightening of the chain. Typically, the vehicles are used intensely for short periods of time, following which they are stored for the subsequent season. This means that tightening of the chains frequently takes place only rarely or even never in practice. What typically happens is that the chain is taken off and one or more chain links are removed when it has been stretched to an unacceptable length.

From DE-U-89024222 a system for tightening bottom chains on an agricultural vehicle is known. This system tightens the chain by means of hydraulic cylinders, which are working with the same pressure as the hydraulic motor that is driving the bottom chain. This results in a high tightening pressure while starting up and subsequent a lower pressure when the bottom chain is running. If the bottom chain according to DE-U-89024222 is to be moved backwards a valve can be shut manually in order to maintain the tightness of the bottom chain.
This device has the disadvantage that the maximum tightening pressure cannot be maintained while operating.

Further a system for tightening chains on a chain transporter is known from EP-A-0497447. In this case the subject is a transporter for the use in coal mines.
The chains are tightened by hydraulic cylinders that are connected to a pumping station. This pumping station supplies the cylinders with a constant pressure corresponding to the necessary pressure when starting up, which is higher than the necessary pressure while operating. After a previously set period of time the system will carry out a pressure relief of the tightening cylinders by means of a pre-set pressure relief valve. The system according to EP-A-0497447 necessitates a hydraulic pumping station that constantly supplies the pressure needed for the tightening cylinders to work.

Accordingly, the object of the invention is to provide a self-adjusting chain tightener system in a vehicle of the type mentioned in the opening paragraph, where the chain tightner system operates automatic and without manual operation of valves of any kind.

The invention comprises a vehicle of the type mentioned in the opening paragraph, wherein the regulation system comprises a non-return valve which is positioned between the chain tightener means and the hydraulic motor.

When the hydraulic bottom chain feed system already provided on the vehicle is extended with a hydraulically activatable means for chain tightening, a self-adjusting chain tightening is thus provided on a vehicle according to the invention, requiring no regular manual adaptation or adjustment of the distance between the pulley wheels in the chain transmission, as the chain tightener means can constantly keep a given tension in the chain, in that a hydraulic cylinder presses or pulls one of the pulley wheels in the chain transmission in a direction away from the other wheel or wheels. This current control of the chain tension may be provided by controlling the pressure of the oil in the cylinder and thereby the force applied to the pulley wheel to establish and maintain a desired tension in the chain transmission.

This current regulation of the chain to maintain an approximately constant tension in it results in less wear and thereby ensures a longer service life of the chain.

Using a non-return valve positioned between the chain tightener means and the hydraulic motor ensures a constant oil pressure in the hydraulic cylinder/cylinders, irrespective of the oil pressure in the rest of the hydraulic system. In particular, it is turned to account that when the hydraulically driven feed device is started, a peak pressure is generated for the hydraulic motor to get the chain started. This pressure is used for affecting the cylinders in the chain tightener means over this non-return valve, thereby tightening the bottom chains. After a few seconds the necessary pressure to pull the bottom chains drops to a somewhat lower level, said non-return valve ensuring that the high pressure on the cylinders is maintained, thereby preventing reduction in the pressure on the cylinders in the chain tightener and slackening of the chains.

In a preferred embodiment of a vehicle according to the invention, pressure regulating means can be arranged in connection with the non-return valve.
This embodiment gives the possibility of adjusting the oil pressure in the cylinders if dessired. Moreover it is possible to slacken the chain for service by activating a by-pass function of the non-return valve.

The invention will be described more fully below with reference to the associated drawing, in which
- fig. 1: is a lateral view of a vehicle according to the invention,
- fig. 1a: is a section of fig. 1, showing the chain tightener means with which the vehicle shown in fig. 1 is provided,
- fig. 2: is an exploded top view of the chain tightener means,
- fig. 3: is a schematic view of the regulation system for tightening the bottom chains, and
- fig. 4: is a three-level view of the mounting device for the hydraulic cylinders.

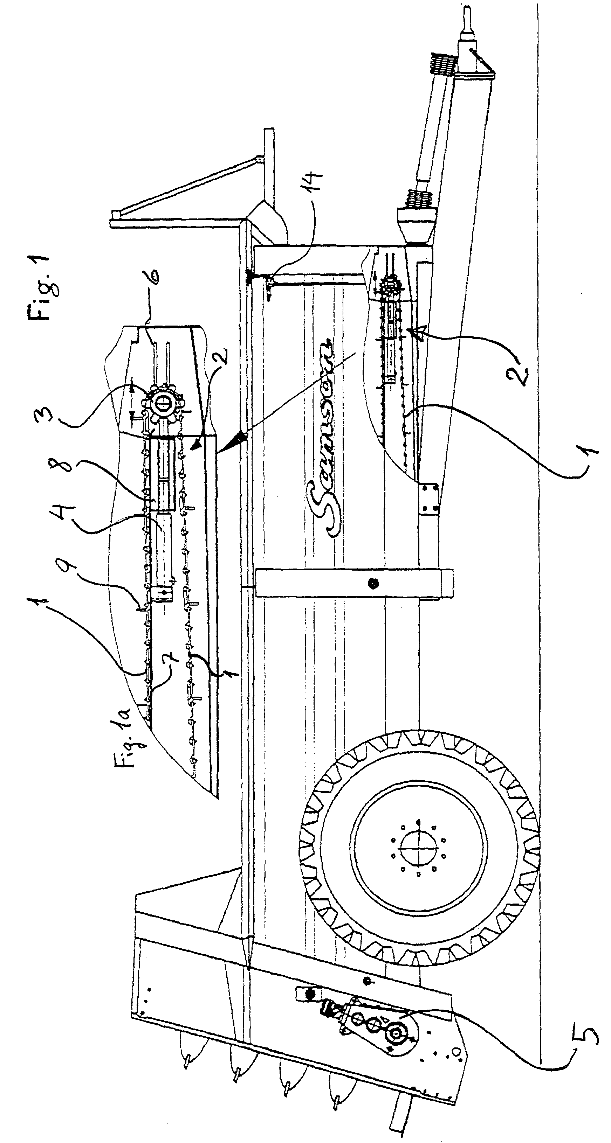

Fig. 1 shows a vehicle according to the invention in the form of a spreader for spreading spreadable materials, such as farmyard manure, sludge or the like, and here with two bottom chains 1, which are arranged at the side of each other in the bottom of the body, and which are provided with transverse carrier elements 9. The bottom chains 1 are moreover provided with chain tightener means 2 for tightening the chains 1, and the bottom chains 1 are driven by a hydraulic motor 5 which is connected to chain wheels (not shown) with which the chains at one end of the feed device are engaged, said chain wheel being mounted in the bottom of the body or the chassis 7 of the vehicle. At the other end of the feed device, each of the chains 1 runs about a pulley wheel 3 in engagement with it, said pulley wheel being mounted on the chain tightener means 2 which are in turn secured to the body or in the chassis 7 of the vehicle.

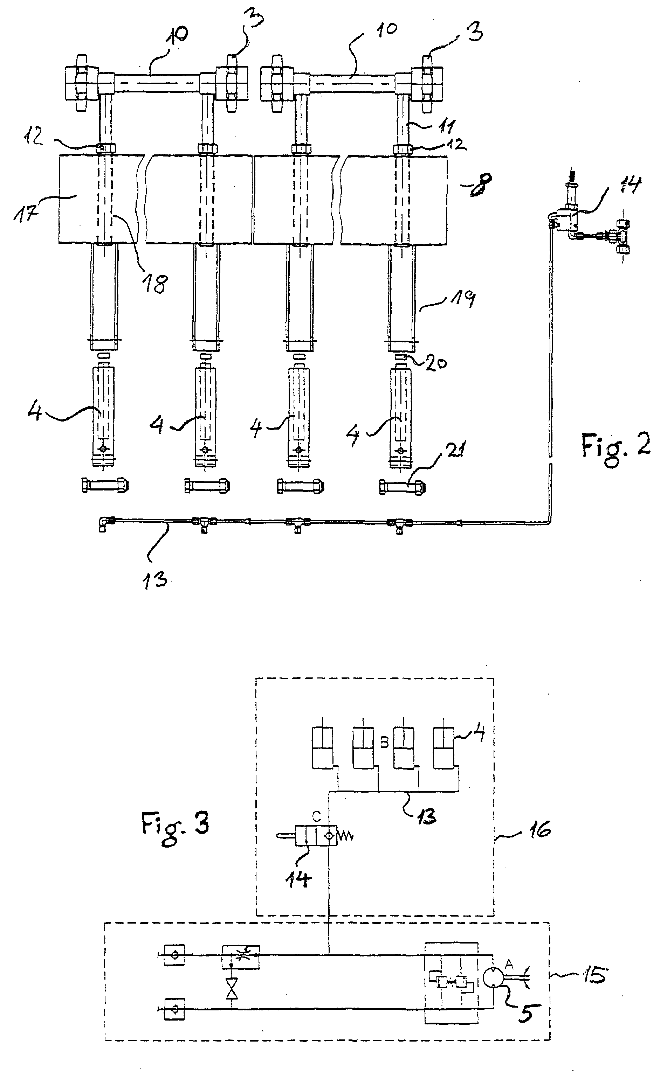

The chain tightener means 2, which are shown in greater detail in fig. 1a, are capable of displacing the pulley wheel 3 in a guideway 6 in a direction in parallel with the travelling direction of the bottom chain. As appears from fig. 1a and fig. 2 in particular, the chain tightener means 2 comprise a plurality of hydraulic cylinders 4 in the body. The hydraulic cylinders 4 are arranged in a cylinder guide 8 having individual guide means for the pistons of the hydraulic cylinders, so that the cylinders 4 will push the guide 8 away from the suspension in the bottom plate 7, thereby displacing the pulley wheels 3, which are arranged on the cylinder guide 8, linearly in their guideways 6.

In a preferred embodiment of the invention, the pulley wheels for each set of bottom chains 1, i.e. each set of bottom chains 1 interconnected by a plurality of carrier elements 9, are arranged on a common shaft 10, as shown in fig. 2. This common shaft 10 is connected with the cylinder guide 8 via preferably two mounting rods, e.g. threaded rods 11. These rods may extend a certain distance into the guide 8 and moreover be provided with external threads, so that the length by which they protrude from the cylinder guide 8 may be adjusted by means of a nut 12. The attachment of the common shaft on the guide 8 may alternatively be constructed in another way. In the preferred embodiment, the cylinder guide 8 is constructed to mount two hydraulic cylinders 4 therein. It is hereby possible to achieve a more stable regulation of the tension in the chains, optionally together with the adjustment possibilities at the threaded parts 11 and the nuts 12.

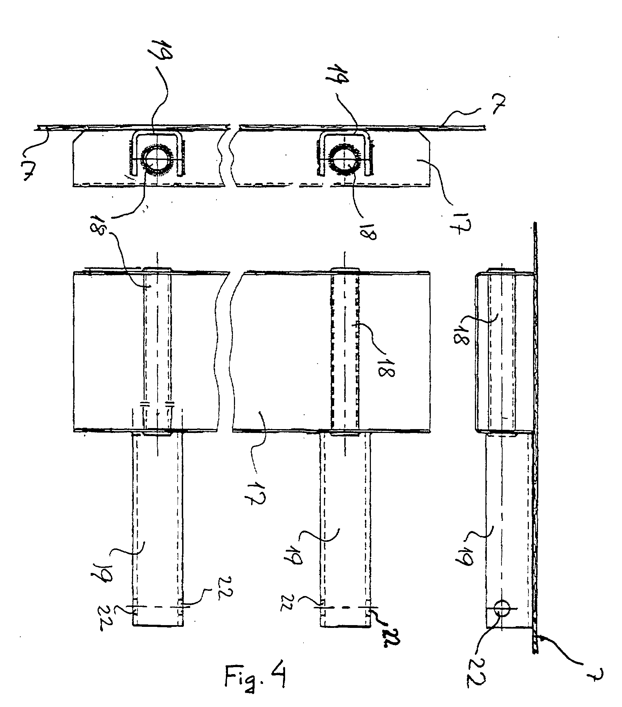

As shown in fig. 4, the cylinder guide 8 has a cross brace 17 which is arranged substantially in parallel with the common shaft 10 of the pulley wheels 3. This cross brace 17 is shaped as a U-profile which is welded to the underside of the bottom plate 7 in the body. A plurality of guide pipes 18 are passed through the two side walls in the U-profile, the mounting rods 11 of the common shaft 10 being inserted into said guide pipes so as to extend almost right through. A cylinder jacket 19 is aligned with each guide pipe 18 on the opposite side of this insertion side for the threaded parts 11 of the cross brace 17. This cylinder jacket 19 consists of a U-profile which is open downwardly. The end of the jacket 19 facing away from the cross brace 17 is formed with holes 22 for the mounting of the cylinders 4 in the cylinder jacket 19 by means of a transverse bolt 21 (see fig. 2). At the other end of the cylinder 4, the cylinder piston protrudes from the housing of the cylinder. The length of the cylinder jacket 19 is adapted so as to fit the length of the housing of the hydraulic cylinder. The piston on the cylinder 4 thus protrudes a distance into the guide pipe 18, and as its end is moreover provided with a slide member 20 fitting the internal diameter of the pipe, the hydraulic cylinder 4 is suspended in such a manner that it is reliably supported at both ends. When the piston is in its bottom position in the hydraulic cylinder 4, it protrudes slightly into the guide pipe 18, e.g. about 10 mm. The cylinder 4 thus presses on the threaded member 11 inside the guide pipe 18, so that the force from the hydraulic cylinders 4 is transferred via the threaded members to the pulley wheels 3 to tighten the chains 1.

The length of the pipes through the cross brace 17 corresponds at least to the stroke of the cylinders, so that also the extended part of the cylinder piston in a cylinder 4 is covered all the time, thereby provided a good protection of the cylinders 4 against dirt, etc., in addition to good guiding of the outward movement of the piston.

As appears from fig. 2, the cylinders 4 are connected via pipe connections 13 with a non-return valve 14, which is in turn connected with the hydraulic system 15 on the vehicle to operate the hydraulic motor 5, as schematically shown in fig. 3.

The regulation of the chain tension then takes place by applying pressure to the hydraulic system 15 of the vehicle to start the bottom chains. This start generates a peak pressure of about 100 bars for the hydraulic motor 5 to get the chain started. This pressure affects the hydraulic cylinders 4 via the non-return valve 14, and the bottom chains will be tightened.

The necessary pressure to drive the bottom chains 1 drops after a few seconds to e.g. about 50 bars in the hydraulic system 15. The non-return valve 14, however, ensures that the high pressure in the chain regulation system 16 is maintained, so that the chains 1 do not slacken, thereby maintaining the desired tension.

When the chains 1 are in operation, the bottom chains 1 will currently be subjected to wear, which the cylinders 4 constantly compensate, as the pistons in each cylinder, because of the pressure in the cylinders 4, are pushed further out of each of the cylinder housings, thereby maintaining the tension in the chains in spite of the wear.

When the chains 1 have worn so much that the stroke of the cylinders is used up, links have to be removed from the chains 1, and the cylinders are pressed home. This is done by affecting the non-return valve 14, so that the oil in the chain regulation system 16 bypasses the non-return valve 14 and returns to the hydraulic system of the vehicle, thereby relieving the chains 1.

In connection with the non-return valve 14 it might be contemplated also to arrange pressure regulation means, so that the pressure maintained on the cylinders in operation may be adjusted, which allows the chain tension to be adjusted.

It should be noted in connection with the invention that a vehicle according to the invention may be a trailer as well as a self-propelled vehicle.

## Claims

1. A vehicle, preferably an agricultural vehicle, such as a spreader for spreading spreadable materials such as farmyard manure, compost, sludge or the like, comprising a body and a hydraulic motor (5) for driving a feed device which is arranged in the bottom (7) of the body, and which comprises at least one bottom chain (1) having associated pulley wheels (3) and chain tightener means (2) for tightening the chain (1) through a substantially linear displacement of at least one of the pulley wheels (3), where the chain tightener means (2) comprise one or more hydraulic cylinders (4) which, together with the hydraulic motor (5), communicate with the hydraulic system (15) of the vehicle via a regulation unit, **characterized in that** the regulation system comprises a non-return valve (14) which is positioned between the chain tightener means (2) and the hydraulic motor (5).

2. A vehicle according to claim 1, **characterized in that** pressure regulation means are arranged in connection with the non-return valve (14).

## Patentansprüche

1. Fahrzeug, vorzugsweise landwirtschaftliches Fahrzeug, wie etwa ein Streufahrzeug zum Verteilen streubarer Materialien, wie z.B. Dung, Kompost, Schlamm oder dergleichen, enthaltend einen Aufbau und einen Hydraulikmotor (5) zum Antrieb einer Austrageinrichtung, die an dem Boden (7) des Aufbaus angeordnet ist und welche mindestens eine Kratzbodenkette (1) und zugehörige Kettenräder (3) und eine Kettenspanneinrichtung (2) zum Spannen der Kette (1) durch eine im wesentlichen lineare Verschiebung mindestens eines der Kettenräder enthält, wobei die Kettenspanneinrichtung (2) einen oder mehrere Hydraulikzylinder (4) enthält, die zusammen mit dem Hydraulikmotor (5) mit dem Hydrauliksystem (15) des Fahrzeugs über eine Regeleinheit in Verbindung stehen, **dadurch gekennzeichnet, daß** das Regelsystem ein Rückschlagventil (14) enthält, das zwischen der Kettenspanneinrichtung (2) und dem Hydraulikmotor (5) positioniert ist.

2. Fahrzeug nach Anspruch 1, **dadurch gekennzeichnet, daß** eine Druckregeleinrichtung in Verbindung mit dem Rückschlagventil (14) angeordnet ist.

## Revendications

1. Véhicule, de préférence véhicule agricole, comme une épandeuse destinée à épandre des matières pouvant être épandues, comme de l'engrais fermier, du compost, du lisier, ou analogue, comprenant un corps et un moteur hydraulique (5) destiné à entraîner un dispositif d'alimentation qui est agencé dans la partie inférieure (7) du corps, et qui comprend au moins une chaîne de fond (1) comprenant des poulies associées (3) et un moyen (2) formant tendeur de chaîne destiné à tendre la chaîne (1) par un décalage sensiblement rectiligne d'au moins l'une des poulies (3), dans lequel le moyen (2) formant tendeur de chaîne comprend un ou plusieurs vérins hydrauliques (4) qui, conjointement avec le moteur hydraulique (5), communique avec le système hydraulique (15) du véhicule via un module de régulation, **caractérisé en ce que** le système de régulation comprend un clapet de non-retour (14) qui est placé entre le moyen (2) formant tendeur de chaîne et le moteur hydraulique (5).

2. Véhicule selon la revendication 1, **caractérisé en ce que** des moyens de régulation de pression sont agencés en connexion avec le clapet de non-retour (14).
